# EUROPÄISCHE PATENTSCHRIFT

(11) **EP 0 531 709 B1**
(45) Veröffentlichungstag und Bekanntmachung des Hinweises auf die Patenterteilung: **19.07.1995**
(21) Anmeldenummer: 92113295.7
(22) Anmeldetag: 05.08.1992
(51) Int. Cl.: F16L 47/00, B29C 70/00, B29C 45/14

(54) **Übergangsstück für Rohrleitungen**
Transition piece for pipes
Pièce intermédiaire pour conduites

(30) Priorität: 07.09.1991 DE 4129853
(43) Veröffentlichungstag der Anmeldung: 17.03.1993
(73) Patentinhaber: FRIATEC AG KERAMIK- UND KUNSTSTOFFWERKE, D-68229 Mannheim (DE)
(72) Erfinder: Bläss, Jürgen, W-6806 Heddesheim (DE)
(74) Vertreter: Klose, Hans, Dipl.-Phys.

(56) Entgegenhaltungen:
- EP-A- 0 306 689
- FR-A- 2 610 693

## Beschreibung

Die Erfindung bezieht sich auf ein Übergangsstück für Rohrleitungen gemäß den im Oberbegriff des Patentanspruchs 1 angegebenen Merkmalen.

Aus der DE 37 21 577 C2 ist ein derartiges Übergangsstück bekannt, welches als eine Kunststoffmuffe mit einem Gewindeeinsatz aus Metall ausgebildet ist. Der Gewindeeinsatz weist einen im wesentlichen zylindrischen, rohrförmigen und nach außen mit einer zahnartigen Riffelung versehenen Abschnitt sowie eine Ringnut mit einem elastischen Dichtring auf. Bei der Herstellung wird der Gewindeeinsatz unter Anwendung von Druck in die Innenwandung einer Aufnahmeöffnung der Kunststoffmuffe eingeschoben, wobei gleichzeitig die genannte Innenwandung im Bereich der zahnartigen Riffelung zum Einbetten der Zähne der Riffelung erwärmt wird und der Dichtring in dichtende Anlage der Innenwandung der Kunststoffmuffe verquetscht wird. Die Herstellung muß mit großer Sorgfalt durchgeführt werden, damit das Einpressen der Zähne und damit die Verankerung des Gewindeeinsatzes in dem Kunststoff erreicht wird und der elastische Dichtring im Hinblick auf die geforderte Dichtwirkung für eine lange Lebensdauer zuverlässig verquetscht bleibt. Es müssen sehr enge Toleranzen eingehalten werden, damit die axiale Festlegung des Gewindeeinsatzes in der Kunststoffmuffe und die hierdurch bedingte Kompression des Dichtringes erreicht und beibehalten werden kann. Dieser Aspekt ist vor allem unter Berücksichtigung der Serienfertigung in hohen Stückzahlen von Bedeutung. Durch axiale Zugkräfte, welche der Einpreßkraft bei der Herstellung entgegengerichtet sind, besteht die Gefahr, daß die axiale Festlegung des Gewindeeinsatzes in der Kunststoffmuffe zumindest gelockert wird und den heutigen hohen Anforderungen hinsichtlich Gasdichtheit und/oder Flüssigkeitsdichtheit nicht mehr entsprochen wird.

Aus der EP 66 704 A1 ist ein Verbindungsstück zum Einbau in eine Fluid führende Leitung bekannt, welches aus einem Metallteil und einer Kunststoffmuffe zusammengesetzt ist. Das Metallteil enthält in der äußeren Oberfläche eine Erweiterung, in welche eine umlaufende Rille mit Schwalbenschwanzprofil oder ein umlaufender Vorsprung mit entsprechendem Profil ausgebildet ist. Beim Spritzgießen der Kunststoffmuffe bildet sich auf deren Innenseite ein komplementärer Vorsprung bzw. eine komplementäre Rille mit Schwalbenschwanprofil. Die Fertigung des Metallteils erfordert einen nicht unerheblichen Aufwand. Bedingt durch die unterschiedlichen Temperaturkoeffizienten von Metall und Kunststoff kann unter Berücksichtigung der in der Praxis auf derartige Verbindungsstücke einwirkenden Temperaturänderungen die Dichtheit nicht ohne weiteres gewährleistet werden. Es sind daher noch zusätzliche Ringe und Dichtungen vorgesehen, welche einen zusätzlichen Fertigungsaufwand erfordern und Montagefehler nicht mit der erforderlichen Sicherheit ausschließen.

Ferner ist aus DE 88 09 742 U1 ein Übergangsstück aus Kunststoff zum Verbinden von Kunststoffrohren mit Armaturen oder Rohren aus metallischen Werkstoffen bekannt, dessen metallischer Einsatz oder Hülse wenigstens eine Umfangsnut mit einer schwalbenschwanzartig abgeschrägten Flanke aufweist. Der Nutquerschnitt ist zum Nutgrund erweitert, wobei die Nut nach dem Spritzen des Kunststoffes vollständig von diesem ausgefüllt ist. Die Innenfläche der metallischen Hülse ist ebenfalls mit einer Ringnut versehen, welche vom Kunststoff der Muffe ausgefüllt ist. Da der Kunststoff sowohl von außen als auch von innen in den metallischen Einsatz eingreift, sind vergleichsweise große radiale Abmessungen erforderlich und insgesamt wird ein hoher Materialeinsatz benötigt. Elastische Dichtungen sind nicht vorgesehen, so daß aufgrund des unterschiedlichen Temperaturverhaltens von Metall und Kunststoff Schwierigkeiten im Hinblick auf die Dichtheit und Funktionssicherheit zu befürchten sind.

Ein Übergangselement zur Verbindung einer Armatur mit einem Kunststoffrohr ist aus DE 88 13 202 U1 bekannt. Auch bei diesem Übergangselement enthält die metallische Gewindebuchse radial innen und radial außen Nuten, in welche der Kunststoff beim Sritzen fließt. In wenigstens einer Nut ist ferner ein Dichtring angeordnet. Es sind keine besonderen Vorkehrungen getroffen, um nach dem Spritzen des Kunststoffes eine elastische Vorspannung des Dichtringes zu erhalten und für die gesamte Lebensdauer zu gewährleisten.

Schließlich zeigt die DE 32 46 768 C1 eine gas- und flüssigkeitsdichte Verbindung zwischen einem Kunststoffkörper und einem darin durch Umfließen mit einer plastifizierten Kunststoffmasse unter Druck eingebetteten Metallkörper. Der Metallkörper ist an seiner Außenseite mit wenigstens einer Umfangsnut versehen, in welche ein die Nut in Axialrichtung ausfüllender Dichtring angeordnet ist. Diese Nut ist in der Weise geformt, daß sie im Bereich ihres Nutgrundes ein von dem Dichtring nicht erfaßtes Ausweichvolumen besitzt. In dieses Ausweichvolumen soll der Dichtring während des Kunststoffspritzens ausweichen und nach Verfestigung des Kunststoffes dort seine zur Abdichtung erforderliche Rückstellkraft entwickeln. Durch besondere Maßnahmen muß das genannte Ausweichvolumen geschaffen werden. Ist die Nut keilförmig radial nach außen öffnend ausgebildet, so müssen beim Spritzen recht erhebliche Haftreibungskräfte überwunden werden und es ist nicht ohne weiteres sichergestellt, daß die erforderliche elastische Vorspannung des Dichtringes erreicht wird. Da der Dichtring beim Spritzen des Kunststoffes teilweise aus der Nut herausragt, besteht die Gefahr, daß während des Spritzens der Dichtring durch den Druck des Kunststoffes aus der Nut teilweise herausgelöst wird und somit Kunststoff zum Nutgrund gelangt und letztendlich eine sichere Abdichtung nicht erreicht wird.

Hiervon ausgehend liegt der Erfindung die Aufgabe zugrunde, ein derartiges Übergangsstück dahingehend weiterzubilden, daß bei funktionssicherer Konstruktion dauerhaft den Sicherheitsanforderungen hinsichtlich Gasdichtheit und/oder Flüssigkeitsdichtheit entsprochen wird. Die Fertigung soll auch unter Berücksichtigung von hohen Stückzahlen einen geringen Aufwand erfordern und gleichwohl soll das Übergangsstück unter Berücksichtigung von hohen Temperaturänderungen sowie einwirkenden Kräften eine zuverlässige Abdichtung für eine lange Lebensdauer gewährleisten. Das Übergangsstück soll aus einfachen Bauteilen aufgebaut sein und einen geringen Materialeinsatz bei niedrigem Gewicht erfordern.

Die Lösung dieser Aufgabe erfolgt nach den kennzeichnenden Merkmalen des Patentanspruchs 1.

Das vorgeschlagene Übergangsstück zeichnet sich durch eine funktionssichere Konstruktion und einen einfachen Aufbau aus. Wenigstens eine Seitenwand der Ringnut ist in der Weise angeordnet, daß die Nutbreite in Richtung zum Nutboden hin zunimmt. Bei der Herstellung, insbesondere dem Spritzen des Kunststoffteils, erfolgt eine Verformung des elastischen Dichtringes im wesentlichen nur in radialer Richtung. Eine Verformung des Dichtringes in axialer Richtung und hierdurch bedingte Reibkräfte bei der Verformung und eine Abschwächung der radialen Verpressung wird praktisch vermieden. Vielmehr wird der Einspritzdruck in der Ringnut im wesentlichen nur zur radialen Verpressung des O-Ringes genutzt, wodurch eine zuverlässige und hohe Dichtwirkung gewährleistet wird. Der Einsatz ist zweckmäßig als ein Gewindeeinsatz ausgebildet, um in einfacher Weise die Verbindung mit einem Rohr aus Metall zu ermöglichen. Durch die Nennung des Gewindeeinsatzes erfolgt keineswegs eine diesbezügliche Einschränkung der Erfindung, denn der Einsatz kann beispielsweise auch als Bestandteil einer Bajonettverbindung oder dergleichen ausgebildet sein, um den Anschluß an ein Metallrohr zu ermöglichen. Der Einsatz wird durch im wesentlichen rotationssymmetrische Bearbeitung gefertigt, und zwar insbesondere auf entsprechenden Drehautomaten oder dergleichen, wodurch erhebliche Fertigungs- und Kostenvorteile erzielt werden.

Die Neigung der Seitenwand und bevorzugt der beiden Seitenwände der Ringnut und der mittlere Abstand der Seitenwände sind unter Berücksichtigung des Kerndurchmessers des Dichtringes aufeinander abgestimmt, so daß der Dichtring im wesentlichen nur linienförmig an der oder den konisch geneigten Seitenwänden anliegt und beim Spritzen ein Umfließen und Eindringen von Kunststoff in den Bereich des Nutbodens verhindert wird. Aufgrund der konischen Ausbildung der Seitenwände und Abstimmung des Neigungswinkels erfolgt über den Umfang praktisch nur eine linienförmige Anlage des Dichtringes an den Seitenwänden und eine flächige Anlage wird weitgehend ausgeschlossen. Beim Spritzen des Kunststoffteils und dem dabei erfolgenden Verpressen des Dichtringes erfolgt die radiale Bewegung der Dichtringaußenfläche an der Seitenwand der Nut weitgehend in einer Rollbewegung, wobei praktisch keine Haftkraft zu überwinden ist und letztendlich der Einpreßdruck optimal auf die radiale Deformation des elastischen Dichtringes konzentriert wird. Nach der Herstellung wird der in der Ringnut erstarrte Kunststoffteil aufgrund der erfindungsgemäß vorgeschlagenen Schrägstellung der zumindest einen Seitenwand in der Ringnut arretiert. Da die Breite der Ringnut im Bereich deren Umfangsöffnung am kleinsten ist, bildet der in der Ringnut erstarrte Kunststoffteil einen Keil, der einem unerwünschten radialen Ausweichen und damit einer Entspannung und Verminderung der Dichtwirkung des Dichtringes entgegenwirkt. Eine bleibende Verpressung des Dichtringes wird auch unter Berücksichtigung des innerhalb der Rohrleitung anstehenden Drucks und erhöhten Temperaturen dauerhaft gewährleistet.

Der Gewindeeinsatz kann aus Metall, insbesondere Messing oder Rotguß, ebenso bestehen wie aus Kunststoff, der eine unmittelbare dichte Verbindung infolge eines Aufschmelzens oder Verschweißens beim Spritzen mit dem Kunststoffteil nicht oder zumindest nur teilweise eingehen kann. Das Kunststoffteil kann als eine Muffe zum Verbinden mit einem Kunststoffrohr ebenso ausgebildet sein wie als Bestandteil einer Armatur eines Behälters oder dergleichen. Für das Kunststoffteil gelangt bevorzugt PVC-C oder ein vergleichbarer Kunststoff zum Einsatz, welcher durch eine gute Wärmestabilität und eine hohe Festigkeit ausgezeichnet ist. Der Anteil des nachchlorierten PVC-C oder allgemein des Kunststoffes am Gesamtvolumen des Übergangsstücks ist wesentlich größer als der des Gewindeeinsatzes, was sich vorteilhaft hinsichtlich Materialeinsatz und Gesamtgewicht auswirkt. Obgleich die Verwendung von PVC-C sich heute als besonders zweckmäßig erweist, erfolgt insoweit keine Einschränkung der Erfindung. Daher sei an dieser Stelle nur beispielshaft auf Polypropylen und Polyäthylen und vergleichbare Kunststoffe ausdrücklich verwiesen, aus welchen das Kunststoffteil entsprechend den geforderten Einsatzbedingungen gefertigt werden kann.

In zweckmäßiger Weise ist ferner eine Verdrehsicherung, und zwar insbesondere in Form eines Sechskants, vorgesehen, welcher in Druckrichtung zweckmäßig hinter dem Dichtring angeordnet ist. Die Abdichtung mittels des Dichtringes ist der Verdrehsicherung und/oder der längskraftschlüssigen Verbindung zwischen Kunststoffteil und Gewindeeinsatz vorgeschaltet, so daß ein Abheben des umspritzten Kunststoffteils sicher verhindert wird. Ferner kann der genannte Sechskant oder dergleichen aus dem Bereich des Kunststoffanteils herausgeführt sein und somit das Ansetzen eines geeigneten Werkzeuges ermöglichen, um bei der Montage eine Beanspruchung zwischen dem Kunststoffteil und dem Gewindeeinsatz zu vermeiden.

In einer besonders zweckmäßigen Ausgestaltung ist die Ringnut auf der einen Seite von einem Haltering begrenzt, welcher mit dem Übergangsstück fest und dauerhaft, insbesondere über eine Gewindeverbindung oder eine Preßpassung verbunden ist. Ferner kann im Rahmen dieser Erfindung ein zusätzlicher Anschlag vorgesehen sein, so daß der Haltering und das Übergangsstück durch die Schließkraft der Spritzgußmaschine zusammengehalten werden. Bevor der Haltering mit dem Übergangsstück verbunden wird, kann der Dichtring über das freie Ende des Übergangsstücks geschoben und auf diesem positioniert werden, wobei eine einfache Rollbewegung erfolgt. Da der Kerndurchmesser des Dichtringes größer ist als die Breite der Ringnut im Bereich der Nutöffnung, wird durch die zweiteilige Ausbildung vermieden, daß der Dichtring durch die schmale Nutöffnung hindurchgezwängt und hierbei gar beschädigt wird. Es ist hierbei nicht zu befürchten, daß die Außenwand des Dichtringes gewellt oder in Falten aufgrund einer Torsion in der Ringnut sitzt, so daß einerseits beim Spritzen das Eindringen von Kunststoff am Dichtring vorbei zum Nutboden hin ermöglicht und andererseits eine funktionssichere Abdichtung in Frage gestellt wäre. Die genaue und definierte Ausrichtung des Dichtringes wird gewährleistet und die beim Aufschieben und Einsetzen des Dichtringes unter radialer Verformung auftretenden Probleme werden vermieden. Desweiteren ergeben sich nicht unerhebliche Vorteile für die Fertigung, da mit einfachen Automaten der Dichtring auf das Übergangsstück durch eine reine Axialbewegung geschoben und nachfolgend der Haltering insbesondere im Endbereich des Übergangsstücks mit diesem problemlos verbunden werden kann.

Gemäß einer weiteren Ausbildung ist der Dichtring in der Ringnut nur mit einer minimalen Vorspannung angeordnet. Diese Vorspannung liegt in zweckmäßiger Weise im Bereich zwischen 1 - 3 % des Innendurchmessers des Dichtringes. Damit wird im Hinblick auf eventuelle Fertigungstoleranzen sichergestellt, daß der Dichtring gut in der Ringnut liegt, andererseits aber vor dem Einwirken des Kunststoffes beim Herstellen des Kunststoffteils praktisch noch nicht verformt ist. Es sei angemerkt, daß üblicherweise Dichtringe, und zwar in Form von O-Ringen, mit vergleichsweise großer Vorspannung in die zugeordneten Nuten eingesetzt werden, wobei eine erhebliche Streckung in Umfangsrichtung vorhanden ist. Die erfindungsgemäße, nur minimale Vorspannung gewährleistet, daß praktisch die gesamte mögliche Verformung des Dichtringes in radialer Richtung bei der Herstellung bzw. beim Spritzen des Kunststoffteiles erfolgt.

Weitere Besonderheiten und Ausgestaltungen der Erfindung sind in den Unteransprüchen sowie der nachfolgenden Beschreibung angegeben.

Die Erfindung wird nachfolgend anhand des in der Zeichnung dargestellten Ausführungsbeispiels näher erläutert. Es zeigen:
- Fig. 1: einen axialen Längsschnitt durch das Übergangsstück,
- Fig. 2: den Gewindeeinsatz und den Dichtring vor dem Zusammenbau und dem Umspritzen mit Kunststoff,
- Fig. 3 - 5: vergrößert die Phasen der Verformung des Dichtringes bei der Herstellung.

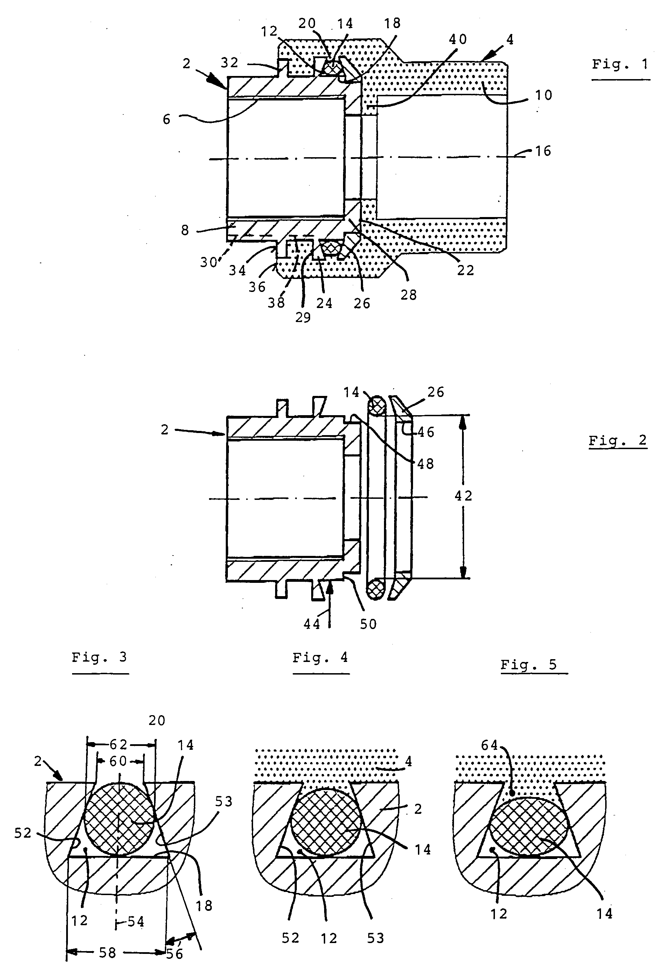

Fig. 1 zeigt in einem axialen Längsschnitt das Übergangsstück, das einen als Gewindeeinsatz 2 ausgebildeten Einsatz und ein Kunststoffteil 4 enthält. Der Gewindeeinsatz 2 weist ein Innengewinde 6 auf, doch könnte entsprechend am freien Ende 8 außen ein Außengewinde vorgesehen sein. Der Einfachheit halber wird nachfolgend nur noch vom Gewindeeinsatz 2 die Rede sein, obgleich der Einsatz auch andere Verbindungsmittel anstelle des Gewindes 6 aufweisen kann. Das Kunststoffteil 4 umgibt teilweise den Gewindeeinsatz 2 und enthält eine Muffe 10, welche in bekannter Weise zur Verbindung mit einem Kunststoffrohr ausgebildet ist. Gegebenenfalls kann auch die Außenfläche des Kunststoffteiles 4 für den Anschluß an ein Kunststoffrohr ausgebildet sein.

Der Gewindeeinsatz 2 weist außen eine Ringnut 12 mit einem elastischen Dichtring 14 auf. Die Seitenwände der Ringnut 12 sind in der Weise geneigt angeordnet, daß in Richtung der Längsachse 16 die Breite am Nutboden 18 größer ist als im Bereich der Nutöffnung 20. Der beim Spritzen des Kunststoffteils 4 im wesentlichen nur radial verpreßte elastische Dichtring 14 wird infolge der Schrägstellung wenigstens der einen Seitenwand der Ringnut durch den in die Ringnut gelangten und dort keilförmig verankerten Kunststoff arretiert und gegen eine unzulässige Entspannung gesichert.

Die Ringnut 12 wird in dem mit dem Kunststoffteil 4 umgebenen zweiten Ende 22 einerseits durch einen Flansch 24 des Gewindeeinsatzes 2 und andererseits durch ein Haltering 26 gebildet. Der Flansch 24 ist integraler Bestandteil des Gewindeeinsatzes 2, während der Haltering 26 ein zusätzliches Bauteil darstellt, welches insbesondere über eine Preßpassung am Ende 22 des Gewindeeinsatzes dauerhaft befestigt ist. Aufgrund der zweiteiligen Ausbildung von Gewindeeinsatz 2 und Haltering 26 kann der Dichtring 14 problemlos im Bereich des zweiten Endes 22 durch einfaches axiales Aufschieben exakt positioniert werden. Verdrehungen des Dichtringes mit Faltenbildung oder Verwerfungen seiner Außenfläche und die hierdurch bedingte Gefahr von Undichtigkeiten werden auf diese Weise zuverlässig ausgeschlossen. Die Mittelebene des Dichtringes 14 liegt nach dem axialen Aufschieben des Dichtringes 14 sowie des Halteringes 26 im wesentlichen in einer zur Längsachse 16 orthogonalen bzw. rechtwinkeligen Radialebene.

Der Gewindeeinsatz 2 weist an seinem zweiten Ende 22 innen einen Anschlag 28 auf, welcher ein zu tiefes Einschrauben eines Metallrohres oder gar eine Beschädigung des Kunststoffteiles 4 zuverlässig verhindert. Der Gewindeeinsatz 2 sowie der Haltering 26 sind rotationssymmetrische Drehteile, welche auch auf Automaten ohne besonderen Fertigungsaufwand herstellbar sind. Das Kunststoffteil übergreift den Flansch 24 an seiner dem Ende 8 zugewandten Rückseite und liegt dort an einer axialen Fläche 29 des Flansches 24, so daß in zweckmäßiger Weise mittels des Flansches 24 die axiale Festlegung gewährleistet ist. Der Gewindeeinsatz 2 ist an seinem freien Ende 8 außen mit einem Sechskant 30 für ein Werkzeug versehen, so daß beim Einschrauben eines Rohres in das Innengewinde 6 eine mechanische Beanspruchung und insbesondere ein nachteiliges Drehmoment vom Kunststoffteil 4 ferngehalten wird. Etwa in der Mitte des Gewindeeinsatzes 2 ist in zweckmäßiger Weise ein mit dem Gewindeeinsatz 2 integraler Ring 32 mit einer Stirnfläche 34 vorgesehen. Diese Stirnfläche 34 bildet in zweckmäßiger Weise die Anlage für eine definierte Ausrichtung des Gewindeeinsatzes 2 bezüglich einer Spritzgießform oder dergleichen zur Herstellung des Kunststoffteiles 4. Die Stirnfläche 34 des Ringes 32 liegt somit in der gleichen Ebene wie eine Stirnfläche 36 des Kunststoffteils 4. Zwischen dem Ring 32 und dem Flansch 24 weist der Gewindeeinsatz 2 außen einen zweiten Sechskant 38 auf, welcher zur Drehsicherung des Kunststoffteils 4 bezüglich des Gewindeeinsatzes 2 dient. Entsprechend könnten dort in der Außenfläche des Gewindeeinsatzes radiale Sackbohrungen, Noppen oder ähnliches zur Drehsicherung angeordnet sein. Diese Drehsicherung ist in Druckrichtung hinter dem als O-Ring ausgebildeten Dichtring 14 angeordnet. Der vorgeschaltete Dichtring 14 verhindert somit ein eventuelles Abheben des umspritzten Kunststoffteils von der Drehsicherung. Das Kunststoffteil 4 weist innen, und zwar anliegend an der Außenfläche des Anschlags 28 einen Ringbund 40 auf, dessen Innendurchmesser im wesentlichen gleich groß ist wie der des Anschlags 28 und/oder der miteinander zu verbindenden Rohre. Auf diese Weise werden günstige Strömungsverhältnisse geschaffen und das Absetzen von Ablagerungen, Schmutz und ähnlichem wird vermieden.

Fig. 2 zeigt in einer explosionsartigen Darstellung den Gewindeeinsatz 2, den Dichtring 14 und den Haltering 26. Vor der Montage weist der Dichtring 14 einen Innendurchmesser 42 auf, welcher nur geringfügig kleiner ist als der Außendurchmesser 44 des Gewindeeinsatzes 2 im Bereich der erwähnten Ringnut. Somit wird nur eine minimale Vorspannung, und zwar von 1 bis höchstens 3 % des Innendurchmessers des Dichtringes 14 erreicht, welcher somit vor dem Einwirken des Kunststoffes nur minimal verformt ist. Der Haltering 26 weist eine Innenfläche 46 auf, welche mit der zugeordneten Außenfläche 48 des Gewindeeinsatzes 2 eine Preßpassung bildet. Anschließend an die Außenfläche 48 weist der Gewindeeinsatz 2 in besonders zweckmäßiger Weise einen Ringbund 50 auf, welcher einen Anschlag beim Aufschieben des Halteringes 26 bildet. Die axiale Breite der Ringnut ist somit mittels des Ringbundes 50 definiert vorgebbar. Der hier als Ringbund 50 ausgebildete Anschlag ist für solche Ausbildungen der Erfindung wesentlich, in welchen der Haltering durch die Schließkraft der Spritzgußmaschine auf dem Gewindeeinsatz definiert festgelegt wird.

Anhand der Fig. 3 bis 5 ist das Prinzip der Verformung und Festlegung des elastischen Dichtringes 14 in der Ringnut 12 des Gewindeeinsatzes 2 näher erläutert. Die Ringnut 12 ist hierbei am Außenumfang des Gewindeeinsatzes 2 angeordnet, wobei anstelle des Halterings eine einteilige Ausbildung dargestellt ist und beide Seitenwände 52, 53 Bestandteil des Gewindeeinsatzes 2 sind. Es versteht sich, daß entsprechend den obigen Darlegungen die Seitenwand 53 in zweckmäßiger Weise an dem separaten Haltering angeordnet sein kann. Die beiden Seitenwände 52, 53 sind bezüglich einer Radialebene 54 um einen Winkel 56 geneigt angeordnet. Dieser Winkel 56 liegt in der Größenordnung zwischen 10 bis 25, bevorzugt zwischen 15 bis 20 Winkelgraden. Die am Nutboden 18 vorhandene Breite 58 ist größer als die im Bereich der Nutöffnung 20 vorhandene Breite 60. Wie aus Fig. 3 ersichtlich, ist der Kerndurchmesser 62 des Dichtringes 14 erheblich größer als die Breite 60 der Nutöffnung 20. Der Kerndurchmesser 62, die Neigung der Seitenwände 52, 53 und somit die mittlere Breite der Nut 14 sind in der Weise aufeinander abgestimmt, daß der Dichtring 14 vor dem Umspritzen im wesentlichen nur linienartig an den Seitenwänden 52, 53 sowie dem Nutboden 18 anliegt. In diesem Zustand ist der Dichtring 14 praktisch weder in axialer Richtung noch in radialer Richtung merklich verformt und weist im wesentlichen eine kreisförmige Querschnittsfläche auf. Der Außendurchmesser des Dichtringes 14 ist in zweckmäßiger Weise maximal so groß wie der Außendurchmesser des Ringflansches oder allgemein des Gewindeeinsatzes 2 im Bereich der Ringnut 12.

In Fig. 4 ist schematisch der Beginn des Umspritzens des Gewindeeinsatzes 2 mit dem Kunststoff des zu erzeugenden Kunststoffteils 4 dargestellt. Der zuvor praktisch noch nicht deformierte Dichtring 14 wird nunmehr nahzu ausschließlich in radialer Richtung durch den beim Spritzen des Kunststoffes wirksamen Druck deformiert, bis er schließlich die in Fig. 5 dargestellte elastisch verformte, etwa ovale Form einnimmt. Aufgrund der Schrägstellung der Seitenflächen sowie der Abstimmung der mittleren Nutbreite auf den Durchmesser des Dichtringes 14 erfolgt beim radialen Verpressen und Deformieren des Dichtringes 14 an den Seitenwänden 52, 53, der Ringnut 12 weitgehend nur eine Abrollbewegung und/oder Gleitbewegung unter Vermeidung einer nachteiligen Haftreibung. Hierdurch wird der einwirkende Spritzdruck im wesentlichen zur radialen Verpressung des Dichtringes 14 genutzt.

Wie aus Fig. 5. ersichtlich, ist beim Spritzen Kunststoff im Bereich der Nutöffnung in die Ringnut 12 eingedrungen und bildet dort einen keilförmigen Ring 64. Dieser keilförmige Ring 64 ist erfindungsgemäß integraler Bestandteil des Kunststoffteils 4 und gewährleistet eine zuverlässige Festlegung des deformierten Dichtringes 14 in der Ringnut 12 und wirkt einem unzulässigen Entspannen des Dichtringes 14 dauerhaft entgegen. Dies gilt vor allem unter Berücksichtigung von Temperaturänderungen und hierdurch verursachten Veränderungen in den Abmessungen der Ringnut und des Kunststoffes. Durch die keilförmige Festlegung wird die radiale Verpressung des Dichtringes dauerhaft gewährleistet. Darüber hinaus ist von besonderer bedeutung, daß diese dauerhafte Verpressung zusätzlich durch die unterschiedlichen Ausdehnungskoeffizienten von Metall und Kunststoff unterstützt wird. Da nämlich bei einer Temperaturerhöhung der Kunststoff sich stärker ausdehnt als der metallische Gewindeeinsatz, bewirkt die Volumenvergrößerung des Kunststoffes die Freisetzung von radialen Spannkräften in dem keilförmigen Bereich auf den Dichtring 14 in besonders zweckmäßiger Weise.

Bei den oben erläuterten Ausführungsbeispielen weist die Ringnut 12 eine symmetrische Querschnittsfläche auf, wobei beide Seitenwände 52, 53 mit gleichem Winkel bezüglich der Radialebene konisch geneigt sind. Im Rahmen der Erfindung liegen auch solche Ausgestaltungen, bei welcher gegebenenfalls auch nur eine Seitenwand in einem entsprechend großen Winkel bezüglich der Radialebene geneigt angeordnet ist, wobei aber für alle Ausführungsformen durch den beim Spritzen in die Ringnut eindringenden und auf den Dichtring einwirkenden Kunststoff ein keilartiger Ring gebildet wird, welcher eine sichere Verankerung und dauerhafte Verpressung des Dichtringes 14 in der Ringnut 12 gewährleistet.

Bei den obigen Ausführungsbeispielen umgab das Kunststoffteil 4 außen den Gewindeeinsatz 2, wobei im Bereich der Außenfläche des Gewindeeinsatzes die Ringnut mit dem Dichtring angeordnet war. Der Schnittpunkt der Seitenwände 52, 53 der Ringnut lag somit auf einem größeren Radius außerhalb der Ringnut 12. Zusätzlich oder alternativ kann der Gewindeeinsatz 2 auch im Bereich seiner Innenfläche eine entsprechende Ringnut mit einem Dichtring aufweisen, wobei sich die Seitenwände der innenliegenden Ringnut radial innen, nahe der Längsachse 16 schneiden. Beim Spritzen des Kunststoffteils 4 wird hierbei ein radial nach außen gerichteter Anpreßdruck den Dichtring entsprechend deformieren.

### Bezugszeichen

- 2: Gewindeeinsatz / Einsatz
- 4: Kunststoffteil
- 6: Innengewinde
- 8: freies Ende von 2
- 10: Muffe
- 12: Ringnut
- 14: Dichtring
- 16: Längsachse
- 18: Nutboden
- 20: Nutöffnung
- 22: zweites Ende von 2
- 24: Flansch
- 26: Haltering
- 28: Anschlag
- 29: axiale Fläche
- 30: Sechskant
- 32: Ring
- 34: Stirnfläche von 32
- 36: Stirnfläche von 4
- 38: Sechskant
- 40: Ringbund
- 42: Innendurchmesser von 14
- 44: Außendurchmesser von 18
- 46: Innenfläche von 26
- 48: Außenfläche von 2
- 50: Ringbund
- 52, 53: Seitenwand
- 54: Radialebene
- 56: Winkel
- 58: Breite von 18
- 60: Breite von 20
- 62: Kerndurchmesser von 14
- 64: keilförmiger Ring

## Patentansprüche

1. Übergangsstück für Rohrleitungen, insbesondere für die Verbindung von Kunststoffrohren und Metallrohren, enthaltend ein Kunststoffteil (4) und einen, insbesondere ein Gewinde (6) aufweisenden, Einsatz (2) mit einer Ringnut (12), in welcher ein vom Kunststoff des Kunststoffteils (4) umgebener elastischer Dichtring (14) angeordnet ist,
dadurch gekennzeichnet, daß wenigstens eine Seitenwand (52, 53) der Ringnut (12) derart geneigt angeordnet ist, daß der Nutboden (18) eine größere Breite als die Nutöffnung (20) aufweist, und daß der elastische Dichtring (14) durch beim Herstellen des Kunststoffteils (4) in dem Bereich der Nutöffnung (20) in die Ringnut (12) einfließenden Kunststoff, insbesondere in Form eines keilförmigen Ringes (64), festgelegt ist.

2. Übergangsstück nach Anspruch 1,
dadurch gekennzeichnet, daß insbesondere beide Seitenwände (52, 53) bezüglich einer Radialebene (54) in einem Winkel im Bereich zwischen 10 und 25, bevorzugt 15 und 20 Winkelgraden angeordnet ist.

3. Übergangsstück nach Anspruch 1 oder 2,
dadurch gekennzeichnet, daß vor dem Verpressen des Dichtringes (14) dieser an den Seitenwänden (52, 53) der Ringnut (12) und/oder dem Nutboden (18) im wesentlichen linienförmig anliegt und/oder daß der Dichtring (14) in der Ringnut (12) nur mit einer minimalen Vorspannung angeordnet ist, welche bevorzugt im Bereich zwischen 1 bis 3% des Innendurchmessers des Dichtringes (14) beträgt.

4. Übergangsstück nach einem der Ansprüche 1 bis 3,
dadurch gekennzeichnet, daß die eine Seitenwand (53) der Ringnut an einem Haltering (26) angeordnet ist, welcher insbesondere nach dem Aufschieben des Dichtringes (14) auf den Einsatz (2) mit diesem fest verbunden worden ist, wobei der Einsatz (2) bevorzugt einen Ringbund (50) als Anschlag für den Haltering (26) aufweist.

5. Übergangsstück nach Anspruch 4,
dadurch gekennzeichnet, daß der Haltering (26) mit dem bevorzugt als Gewindeeinsatz ausgebildeten Einsatz (2) mittels Preßpassung oder eines Gewindes verbunden ist.

6. Übergangsstück nach einem der Ansprüche 1 bis 5,
dadurch gekennzeichnet, daß der Einsatz (2) einen Ring (32) aufweist, dessen Stirnfläche (34) im wesentlichen in der gleichen Radialebene liegt wie eine Stirnfläche (36) des Kunststoffteils (4) und/oder daß der Einsatz (2) an seinem freien Ende (8) einen Sechskant (38) oder dergleichen aufweist.

7. Übergangsstück nach einem der Ansprüche 1 bis 6,
dadurch gekennzeichnet, daß der Einsatz (2), insbesondere im Bereich seines zweiten Endes (22), radial innen einen Anschlag (28) aufweist und/oder daß das Kunststoffteil (4) radial innen einen Ringbund (40) als Anschlag für das oder die zu verbindenden Rohre aufweist.

8. Übergangsstück nach einem der Ansprüche 1 bis 7,
dadurch gekennzeichnet, daß insbesondere in Druckrichtung nach dem Dichtring (14) eine Drehsicherung zwischen dem Einsatz (2) und dem Kunststoffteil (4) vorgesehen ist und/oder daß diese Drehsicherung einen bevorzugt auf der Außenfläche des Einsatzes (2) angeordneten Sechskant (38) enthält.

9. Übergangsstück nach einem der Ansprüche 1 bis 8,
dadurch gekennzeichnet, daß zur axialen Festlegung des Kunststoffteils (4) bezüglich des Einsatzes (2) dieser eine vom Kunststoffteil übergriffene axiale Fläche (29) aufweist, welche insbesondere an der im freien Ende (8) zugewandten Rückseite des Flansches (24) angeordnet ist.

10. Übergangsstück nach einem der Ansprüche 1 bis 9,
dadurch gekennzeichnet, daß der Kerndurchmesser (62) des Dichtringes (14) im unverpreßten Zustand größer ist als die Breite (60) der Nutöffnung (20) der Ringnut (12) und/oder daß das Kunststoffteil (4) aus chloriertem PVC-C oder einem vergleichbaren Kunststoff besteht daß das Kunststoffteil (4) einen, insbesondere wesentlich, höheren thermischen Ausdehnungskoeffizienten als der Einsatz (2) aufweist, welcher insbesondere aus Metall besteht.

## Claims

1. Transition piece for pipes, in particular for connecting plastic pipes and metal pipes, containing a plastic part (4) and an insert (2), in particular an insert provided with a thread (6), with an annular groove (12) in which an elastic sealing ring (14) surrounded by the plastic of the plastic part (4) is arranged, characterised in that at least one side wall (52, 53) of the annular groove (12) is inclined in such a manner that the groove base (18) has a greater width than the groove opening (20) and that the elastic sealing ring (14) is fixed by plastic flowing into the annular groove (12) in the region of the groove opening (20) during the manufacture of the plastic part (4), in particular in the form of a wedge-shaped ring (64).

2. Transition piece according to claim 1, characterised in that, in particular, both side walls (52, 53) are arranged at an angle in the region of between 10 and 25, preferably between 15 and 20 angular degrees, relative to a radial plane (54).

3. Transition piece according to claim 1 or claim 2, characterised in that, prior to compression of the sealing ring (14), the latter bears against the side walls (52, 53) of the annular groove (12) and/or the groove base (18) in an essentially linear manner and/or that the sealing ring (14) is arranged in the annular groove (12) with only minimal initial compression, preferably in the region of between 1 and 3 % of the internal diameter of the sealing ring (14).

4. Transition piece according to one of claims 1 to 3, characterised in that one side wall (53) of the annular groove is arranged on a retaining ring (26) which is rigidly connected to the insert (2), in particular once the sealing ring (14) has been slipped on to it, the insert (2) preferably having an annular collar (50) as a stop for the retaining ring (26).

5. Transition piece according to claim 4, characterised in that the retaining ring (26) is connected to the insert (2) preferably in the form of a threaded insert by means of a press fit or a thread.

6. Transition piece according to one of claims 1 to 5, characterised in that the insert (2) has a ring (32) the end face (34) of which is situated essentially in the same radial plane as an end face (36) of the plastic part (4) and/or that the insert (2) is provided at its free end (8) with a hexagon (38) or the like.

7. Transition piece according to one of claims 1 to 6, characterised in that the insert (2) is provided radially on the interior, in particular in the region of its second end (22), with a stop (28) and/or that the plastic part (4) is provided radially on the interior with an annular collar (40) as a stop for the pipe or pipes to be connected.

8. Transition piece according to one of claims 1 to 7, characterised in that an anti-rotation device is provided between the insert (2) and the plastic part (4), in particular downstream of the sealing ring (14) in the direction of compression and/or that this anti-rotation device contains a hexagon (38) preferably arranged on the outer face of the insert (2).

9. Transition piece according to one of claims 1 to 8, characterised in that, for axial fixing of the plastic part (4) relative to the insert (2), the latter has an axial face (29) overlapped by the plastic part arranged in particular on the rear face of the flange (24) directed towards the free end (8).

10. Transition piece according to one of claims 1 to 9, characterised in that the core diameter (62) of the sealing ring (14) in the uncompressed state is greater than the width (60) of the groove opening (20) of the annular groove (12) and/or that the plastic part (4) consists of chlorinated PVC or a comparable plastic and that the plastic part (4) has a higher, in particular a substantially higher, coefficient of thermal expansion than the insert (2) which consists in particular of metal.

## Revendications

1. Pièce intermédiaire pour conduites, en particulier pour relier des conduites en matière synthétique et des conduites métalliques, comprenant une pièce (4) en matière synthétique et un insert (2), en particulier un insert présentant un filetage (6) avec une rainure annulaire (12), insert dans lequel est placé un anneau d'étanchéité élastique (14) entouré par la matière synthétique de la pièce (4) en matière synthétique, ***caractérisée en ce qu'***au moins une paroi latérale (52, 53) de la rainure annulaire (12) est disposée selon une inclinaison, telle que le fond (18) de la rainure présente une largeur plus grande que l'ouverture (20) de la rainure, et ***en ce que*** l'anneau d'étanchéité élastique (14) est immobilisé par la matière synthétique s'écoulant dans la rainure annulaire (12), lors de la fabrication de la pièce (4) en matière synthétique, au niveau de l'ouverture (20) de la rainure, en particulier sous la forme d'un anneau cunéiforme (64).

2. Pièce intermédiaire selon la Revendication 1, ***caractérisée en ce qu'***en particulier les deux parois latérales (52, 53) sont disposées, par rapport à un plan radial (54), selon un angle compris entre 10 et 25 degrés, de préférence entre 15 et 20 degrés.

3. Pièce intermédiaire selon la Revendication 1 ou 2, ***caractérisée en ce qu'***avant la compression de l'anneau d'étanchéité (14), celui-ci repose contre les parois latérales (52, 53) de la rainure annulaire (12) et/ou le fond (18) de la rainure pour l'essentiel le long d'une ligne, et/ou ***en ce que*** l'anneau d'étanchéité (14) est placé dans la rainure annulaire (12) seulement avec une précontrainte minimale, qui est comprise de préférence entre 1 et 3 % du diamètre intérieur de l'anneau d'étanchéité (14).

4. Pièce intermédiaire selon l'une des Revendications 1 à 3, ***caractérisée en ce que*** l'une (53) desdites parois latérales de la rainure annulaire est placée sur une bague de retenue (26), laquelle a été reliée fermement à l'insert (2) en particulier après l'engagement de l'anneau d'étanchéité (14) sur celui-ci, l'insert (2) présentant de préférence une collerette annulaire (50) comme butée pour la bague de retenue (26).

5. Pièce intermédiaire selon la Revendication 4, ***caractérisée en ce que*** la bague de retenue (26) est reliée à l'insert (2), conformé de préférence en insert fileté, au moyen d'un ajustage serré ou d'un filetage.

6. Pièce intermédiaire selon l'une des Revendications 1 à 5, ***caractérisée en ce que*** l'insert (2) présente un anneau (32) dont la surface frontale (34) se trouve pour l'essentiel dans le même plan radial qu'une surface frontale (36) de la pièce (4) en matière synthétique et/ou ***en ce que*** l'insert (2) présente sur son extrémité libre (8) un hexagone (38) ou similaire.

7. Pièce intermédiaire selon l'une des Revendications 1 à 6, ***caracterisée en ce que*** l'insert (2), en particulier au niveau de sa deuxième extrémité (22), présente une butée (28) à l'intérieur dans le sens radial, et/ou ***en ce que*** la pièce (4) en matière plastique présente, à l'intérieur dans le sens radial, une collerette annulaire (40) comme butée pour la ou les conduite(s) à relier.

8. Pièce intermédiaire selon l'une des Revendications 1 à 7, ***caractérisée en ce qu'***en particulier derrière l'anneau d'étanchéité (14) dans la direction de pression, une immobilisation en rotation est prévue entre l'insert (2) et la pièce (4) en matière plastique, et/ou ***en ce que*** cette immobilisation en rotation comprend de préférence un hexagone (38) placé sur la surface extérieure de l'insert (2).

9. Pièce intermédiaire selon l'une des Revendications 1 à 8, ***caractérisée en ce que***, pour l'immobilisation axiale de la pièce (4) en matière synthétique par rapport à l'insert (2), celui-ci présente une surface axiale (29) saisie par la pièce en matière synthétique, surface qui est placée en particulier sur la face arrière de la bride (24) tournée vers l'extrémité libre (8).

10. Pièce intermédiaire selon l'une des Revendications 1 à 9, ***caractérisée en ce que*** le diamètre d'âme (62) de l'anneau d'étanchéité (14) à l'état non comprimé est supérieur à la largeur (60) de l'ouverture (20) de la rainure annulaire (12) et/ou ***en ce que*** la pièce (4) en matière synthétique est constituée de PVC-C surchloré ou d'une autre matière synthétique similaire, et ***en ce que*** la pièce (4) en matière synthétique présente un coefficient de dilatation thermique plus élevé, de préférence largement plus élevé, que celui de l'insert (2), lequel est constitué en particulier de métal.
